# EUROPEAN PATENT SPECIFICATION

(11) **EP 1 638 226 B1**
(45) Date of publication and mention of the grant of the patent: **15.11.2017**
(21) Application number: 05019450.5
(22) Date of filing: 07.09.2005
(51) Int. Cl.: H04H 40/90, H04H 20/26

(54) **Method and apparatus for receiving digital multimedia broadcast (DMB) via satellite**
Verfahren und Gerät für den Empfang vom digitalen Multimediarundfunk über Satellit
Méthode et appareil pour la réception de la diffusion multimédia numérique par satellite

(30) Priority: 08.09.2004 KR 2004071743
(43) Date of publication of application: 22.03.2006
(73) Proprietor: LG ELECTRONICS INC., Yeongdeungpo-gu Seoul 150-721 (KR)
(72) Inventor: Cho, Nam-Shin, Seoul (KR)
(74) Representative: Katérle, Axel

(56) References cited:
- EP-A2- 1 014 608
- EP-A2- 1 024 617
- JP-A- 2000 115 003
- US-A- 5 907 582
- US-A1- 2001 053 189

## Description

### BACKGROUND OF THE INVENTION

### 1. Field of the Invention

The present invention relates to a satellite digital multimedia broadcasting (DMB), and more particularly, to an apparatus for receiving a satellite DMB based on a system E method capable of minimizing a switching time of a video broadcasting channel and a method thereof.

### 2. Description of the Related Art

Generally, a digital multimedia broadcasting (DMB) is a digital broadcasting technique more enhanced than a digital audio broadcasting for providing only an audio service, which refers to a communication service for providing an audio service and a video service to a plurality of channels.

The DMB provides a high sound quality, a high picture quality for a CD or a DVD, etc. through a personal digital assistant (PDA) or a terminal for vehicle even while a user moves. The DMB service is provided by a system A, a system Dh, and a system E.

The system A is based on an orthogonal frequency division multiplexing (OFDM) applied to an SDMB and an European TDMB, and the system Dh uses a method for receiving a satellite DMB based on a terrestrial DMB. Also, the system E uses a code division multiplexing (CDM) method and is applied to a satellite DMB.

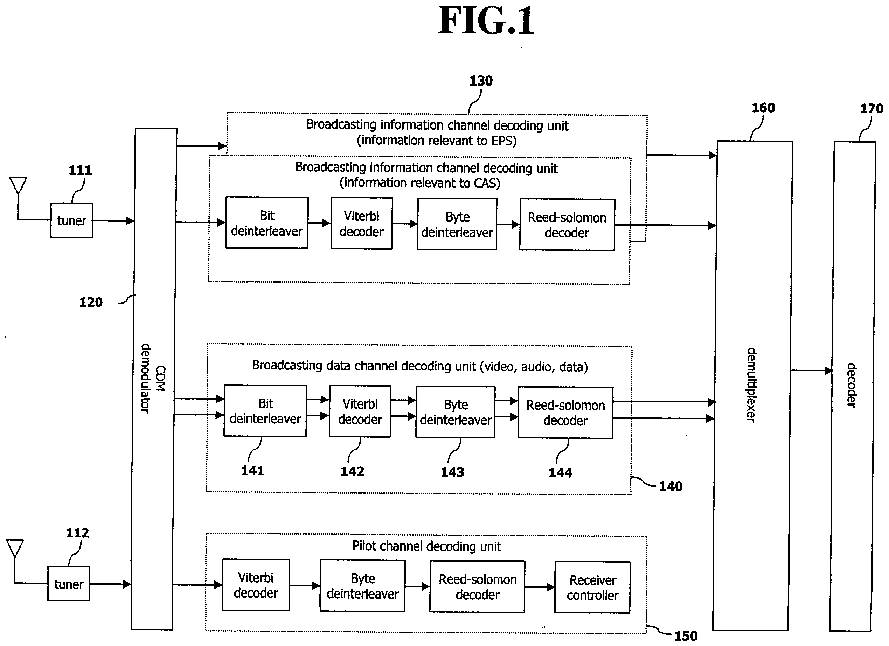

FIGURE 1 is a block diagram showing a satellite DMB receiving apparatus based on a system E in accordance with the related art.

As shown, the related art satellite DMB receiving apparatus comprises tuners 111 and 112, a CDM demodulator 120, a broadcasting information channel decoding unit 130, a broadcasting data channel decoding unit 140, a pilot channel decoding unit 150, a demultiplexer 160, and a decoder 170.

The tuners 111 and 112 demodulates a satellite DMB signal into a base band signal to transmit to the CDM demodulator 120, and the CDM demodulator 120 performs a CDM demodulation for the signal received from the tuners 111 and 112 to extract broadcasting information such as program specification information (PSI), service information (SI), etc. Then, the CDM demodulator 120 provides the extracted broadcasting information to the broadcasting information channel decoding unit 130 by using two Walsh codes among five Walsh codes, and provides broadcasting data information such as video data, audio data, etc. to the broadcasting data channel decoding unit 140 by using two Walsh codes. Also, the CDM demodulator 120 extracts control information of a receiver by using one Walsh code thereby to provide to a pilot channel decoding unit.

Each decoder 130, 140, and 150 decodes information received from the CDM demodulator by using each Walsh code and then inputs the information to the demultiplexer 160.

The demultiplexer 160 demultiplexes information inputted from each decoder 130, 140, and 150 to output to the decoder 170, and the decoder 170 decodes the demultiplexed signal to output an image to a channel selected by a user.

As shown in FIGURE 1, the broadcasting data channel decoding unit 140 of the related art satellite DMB receiving apparatus comprises a bit deinterleaver 141, a viterbi decoder 142, a byte deinterleaver 143, and a Reed-Solomon decoder 144. Each component is formed as a pair in order to decode two Walsh codes.

That is, the broadcasting data channel decoding unit 140 comprises a bit deinterleaver 141 for deinterleaving broadcasting data of a broadcasting channel into a bit unit, a viterbi decoder 142 for decoding the deinterleaved broadcasting data of a broadcasting channel coded into a convolution channel, a byte deinterleaver 143 for deinterleaving the decoded data into a byte unit, and a Reed-Solomon decoder 144 for decoding a byte outputted from the byte deinterleaver 143.

The broadcasting data decoded by the decoders 141 to 144 is demultiplexed by the demultiplexer 160 and then is outputted to the decoder 170. The decoder 170 decodes the demultiplexed signal, thereby outputting a video broadcasting signal to be watched by a user.

However, the related satellite DMB receiving apparatus has the following problem. When the user is to perform a channel switching to another broadcasting channel while watching a specific video broadcasting channel, the CDM demodulator 120 has to perform a CDM demodulation for a Walsh code corresponding to a broadcasting channel selected by the user and has to decode the CDM-demodulated broadcasting signal. While the CDM-demodulated broadcasting signal is decoded, it takes approximately 264msec ∼ 6.514sec to perform a bit deinterleaving. Generally, it takes approximately 3.257sec to perform the bit deinterleaving.

Accordingly, when the user converts a broadcasting channel of the satellite DMB receiving apparatus, approximately 5∼8 seconds are delayed and thereby the user has a difficulty in watching a video broadcasting provided from his desired broadcasting channel. US 5,907,582 discloses a satellite DAB receiver using a CDM demodulator configured to demodulate Walsh encoded data of a broadcast channel selected by a user, wherein two Walsh codes are allocated for each channel.

JP2000115003 discloses a satellite DAB receiver that deinterleaves concurrently more than 3 preferred channels preset by the user in order to reduce waiting time when switching channels.

### SUMMARY OF THE INVENTION

Therefore, an object of the present invention is to provide a satellite DMB receiving apparatus capable of minimizing a delay time at the time of switching a video broadcasting channel, and a method thereof.

To achieve these and other advantages and in accordance with the purpose of the present invention, as embodied and broadly described herein, there is provided a satellite DMB receiving apparatus according to claim 1. To achieve these and other advantages and in accordance with the purpose of the present invention, as embodied and broadly described herein, there is also provided a satellite DMB receiving method according to claim 4. The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIGURE 1 is a block diagram showing a satellite DMB receiving apparatus in accordance with the related art;
FIGURE 2 is a block diagram showing a satellite DMB receiving apparatus based on a system E according to a first embodiment of the present invention;
FIGURE 3 is a chart showing broadcasting channels of a DMB receiving apparatus to which Walsh codes are allocated according to the first embodiment of the present invention;
FIGURE 4 is a chart showing preset broadcasting channels according to the first embodiment of the present invention;
FIGURE 5 is a flowchart showing a satellite DMB receiving method for minimizing a channel switching time according to the first embodiment of the present invention; and
FIGURE 6 is a block diagram showing a satellite DMB receiving apparatus based on a system E according to a second embodiment of the present invention.

### DETAILED DESCRIPTION OF INVENTION

Reference will now be made in detail to the preferred embodiments of the present invention, examples of which are illustrated in the accompanying drawings.

Hereinafter, preferred embodiments of the present invention will be explained with reference to the attached drawings.

The present invention is to provide a satellite DMB receiving apparatus capable of minimizing a channel switching time at the time of converting a broadcasting channel and capable of enabling a user to conveniently watch a broadcasting channel by decreasing time taken to bit-deinterleave broadcasting data of a video broadcasting channel.

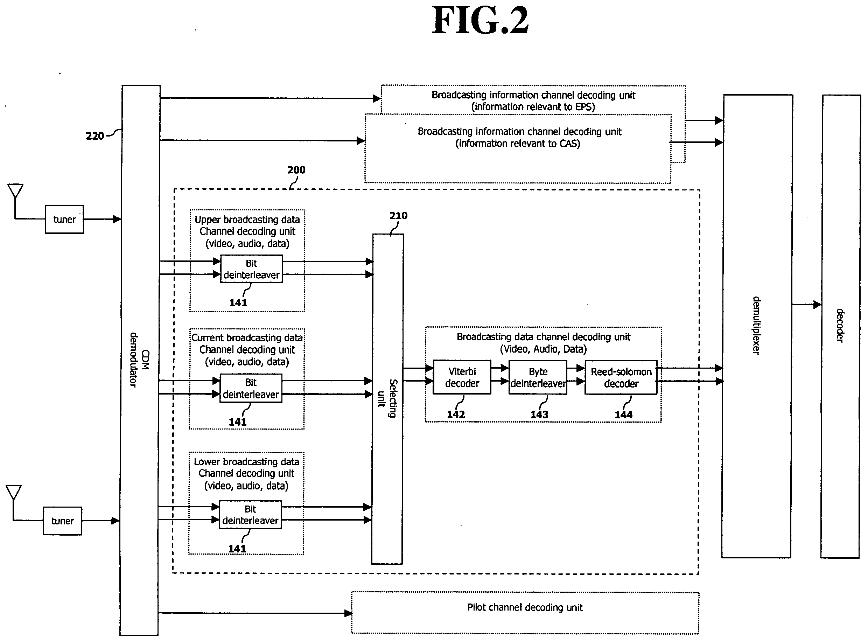

FIGURE 2 is a block diagram showing a satellite DMB receiving apparatus based on a system E according to a first embodiment of the present invention.

As shown in FIGURE 2, the satellite DMB receiving apparatus according to the present invention is the same as the related art satellite DMB receiving apparatus based on a system E except for a broadcasting data channel decoding unit. Accordingly, the same reference numerals were given to the same components as those of the related art satellite DMB receiving apparatus.

Referring to FIGURE 2, a broadcasting data channel decoding unit 200 of the satellite DMB receiving apparatus according to the present invention comprises three bit deinterleavers 141 for bit-deinterleaving CDM demodulated broadcasting data, a selecting unit 180 for transmitting broadcasting data of a broadcasting channel selected by a user among three broadcasting data bit-deinterleaved by the three bit deinterleavers 141 to a viterbi decoder 142, and a series of decoders for decoding broadcasting data transmitted from the selecting unit, that is, a viterbi decoder 142, a byte deinterleaver 143, and a Reed-Solomon decoder 144. Each of the decoders 141 to 144 is constructed as a pair of decoders in order to decode two Walsh codes.

An operation of the satellite DMB receiving apparatus according to the present invention is as follows. Explanations for the same parts as those of the related art satellite DMB receiving apparatus will be omitted. A DMB broadcasting channel is composed of a video channel, an audio channel, and a data channel. Hereinafter, the satellite DMB receiving apparatus of the present invention will be explained based on the video broadcasting channel.

Referring to FIGURE 2, when a user selects a desired broadcasting channel, a tuner receives a satellite DMB signal of a high frequency to demodulate into a base band signal, and then transmits the signal to a CDM demodulator 220. The signal transmitted to the CDM demodulator 220 from the tuner is broadcasting data coded into a Walsh code. The CDM demodulator 220 CDM-demodulates each broadcasting data of three broadcasting channels coded into a Walsh code, thereby extracting broadcasting data having a bit stream format and transmitting to the three bit deinterleavers 141 according to each channel.

If all of the three broadcasting channels are video channels, the CDM demodulator 220 CDM demodulates 6 Walsh codes since broadcasting data of one broadcasting channel is coded into two Walsh codes. The CDM demodulator 220 transmits the CDM-demodulated broadcasting data of the three broadcasting channels to the three bit deinterleavers 141 inside the broadcasting data channel decoding unit 200. Then, the three bit deinterleavers 141 respectively constructed as one pair bit-deinterleave the CDM-demodulated broadcasting data having a bit stream format according to each channel.

The three broadcasting channels include a current broadcasting channel to be watched by the user, an upper broadcasting channel of the current broadcasting channel, and a lower broadcasting channel of the current broadcasting channel.

A selecting unit 210 outputs broadcasting data corresponding to a channel selected by the user to the viterbi decoder 142 to enable the broadcasting data to have a series of decoding processes. That is, the broadcasting data outputted from the selecting unit 210 has a series of decoding processes via the viterbi decoder 142, the byte deinterleaver 143, and the Reed-Solomon decoder 144 and then is demultiplexed and decoded, thereby being processed as an image that can be watched by the user.

If the user has converted from the current broadcasting channel into the upper broadcasting channel or the lower broadcasting channel, the upper broadcasting channel or the lower broadcasting channel becomes the user's current broadcasting channel. Also, an upper broadcasting channel and a lower broadcasting channel are reset based on the current broadcasting channel. Broadcasting data corresponding to the reset three broadcasting channels is CDM-demodulated to be transmitted to the bit deinterleavers 141, and then is bit-deinterleaved according to each broadcasting channel.

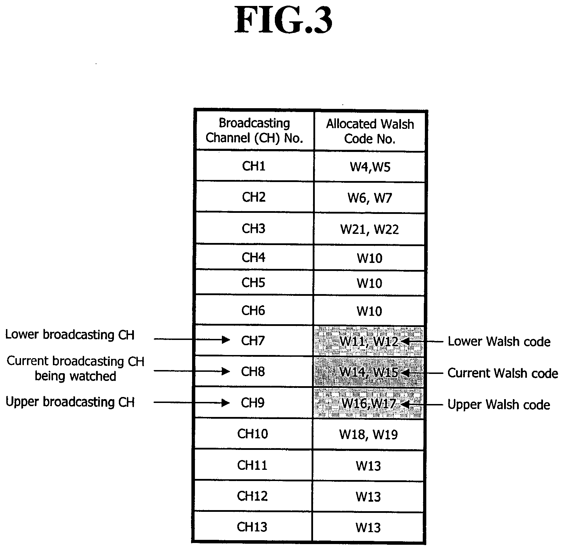

FIGURE 3 is a chart showing broadcasting channels of a DMB receiving apparatus to which Walsh codes are allocated according to the first embodiment of the present invention.

Referring to FIGURE 3, if the broadcasting channels are video broadcasting channels, two Walsh codes (for example, W21 and W22) are allocated to the broadcasting channel (for example, CH3). Also, if the broadcasting channels are audio broadcasting channels, one Walsh codes (for example, W10) is allocated to three audio broadcasting channels (for example, CH4, CH5 and CH6).

As shown in FIGURE 3, if the user is watching the broadcasting channel CH8, the CH7 is a lower broadcasting channel and the CH9 is an upper broadcasting channel. Walsh codes W14 and W15 are allocated to the current broadcasting channel CH8, lower Walsh codes W11 and W12 are allocated to the lower broadcasting channel CH7, and upper Walsh codes W16 and W17 are allocated to the upper broadcasting channel CH9.

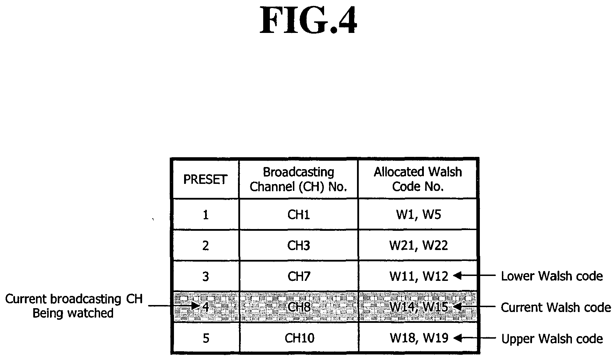

FIGURE 4 is a chart showing preset broadcasting channels according to the first embodiment of the present invention.

As shown in FIGURE 4, when the user converts a broadcasting channel into another broadcasting channel under a state that the user's preference channels have been preset, the user can conveniently perform a channel switching. FIGURE 4 shows that the user's preference broadcasting channels among the video broadcasting channels shown in FIGURE 3 are preset.
As shown in FIGURE 4, if the user is watching the broadcasting channel CH8, the CH7 is a lower broadcasting channel and the CH10 is an upper broadcasting channel. Walsh codes W14 and W15 are allocated to the current broadcasting channel CH8, lower Walsh codes W11 and W12 are allocated to the lower broadcasting channel CH7, and upper Walsh codes W18 and W19 are allocated to the upper broadcasting channel CH10.

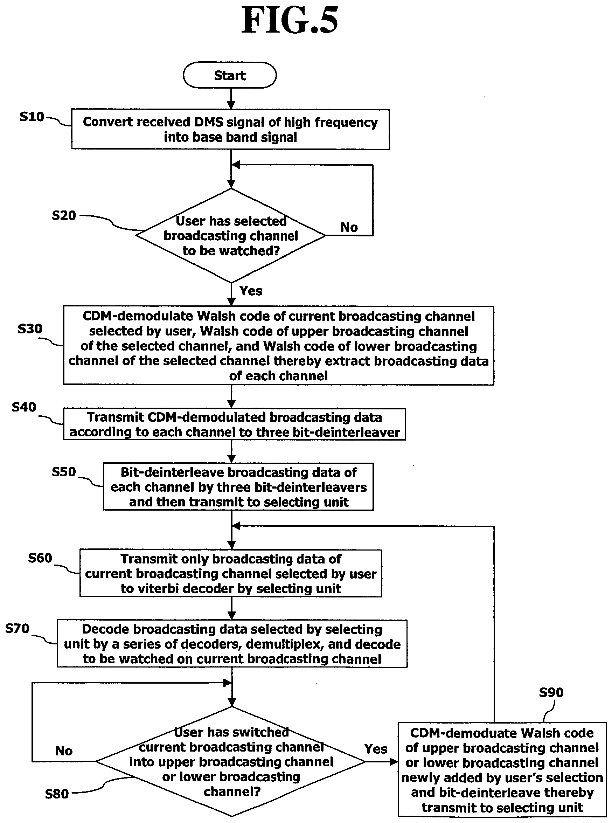

FIGURE 5 is a flowchart showing a satellite DMB receiving method for minimizing a channel switching time according to the first embodiment of the present invention.

Hereinafter, the satellite DMB receiving method for minimizing a channel switching time according to the first embodiment of the present invention will be explained in more detail with reference to FIGURES 2 to 5.

The tuner converts a DMB signal of a high frequency received to an antenna through a diversity path or a single path into a base band signal and then transmits the signal to the CDM demodulator 220 (S10). The base band signal is a signal coded into a Walsh code.

If the user selects his desired channel (for example, the CH8 of FIGURE 3) (S20), the CDM demodulator 220 CDM-demodulates the Walsh codes (W14 and W15) corresponding to the current broadcasting channel CH8, the Walsh codes (W16 and W17) corresponding to the upper broadcasting channel CH9, and the Walsh codes (W11 and W12) corresponding to the lower broadcasting channel CH7 thereby to extract broadcasting data according to each channel (S30). Then, the CDM demodulator 220 separates the broadcasting data of the current broadcasting channel CH8 of FIGURE 3, the upper broadcasting channel CH9, and the lower broadcasting channel CH7 from one another according to each channel and then transmits the broadcasting data to the three bit deinterleavers 141 (S40).

Each of the three bit deinterleavers 141 performs a decoding process for bit-deinterleaving the received broadcasting data of each channel, and then transmits the decoded broadcasting data to the selecting unit 210 (S50). The selecting unit 210 selects only the broadcasting data of the current broadcasting channel CH8 of FIGURE 3 among the transmitted broadcasting data of each channel, and then transmits the selected broadcasting data to the viterbi decoder 142 for decoding convolution channel-coded data (S60).

The broadcasting data transmitted to the viterbi decoder 142 is decoded by the byte deinterleaver 143 and the Reed-Solomon decoder 144 in the same manner as the related one, and then is demultiplexed and decoded. Accordingly, the user watches a video broadcasting provided from the current channel CH8 (S70).

While the user watches the video broadcasting of the current broadcasting channel CH8 of FIGURE 3, the user can perform a channel switching into the upper broadcasting channel CH9 or the lower broadcasting channel CH7 (S80). If the user has switched the current channel CH8 into the upper broadcasting channel CH9, the CDM demodulator 220 CDM-demodulates two Walsh codes (W18 and W19) corresponding to a newly added upper broadcasting channel CH 10 of FIGURE 3 to extract corresponding broadcasting data and then transmits the broadcasting data to the bit-deinterleaver 141. Then, the bit-deinterleaver 141 bit-deinterleaves the broadcasting data and then transmits the CDM-demodulated broadcasting data to the selecting unit 210 (S90). The broadcasting channel CH9 of FIGURE 3 switched by the user is re-set as a current broadcasting channel and broadcasting data of the current broadcasting channel is decoded by the steps S60 and S70, so that the user can watch a video broadcasting provided from the current broadcasting channel.

The satellite DMB receiving method for minimizing a channel switching time according to the first embodiment of the present invention is equally applied to the preset channels shown in FIGURE 4.

As aforementioned, the present invention was explained with respect to the video broadcasting channels. However, the present invention can be applied to broadcasting channels that audio broadcasting channels and data broadcasting channels are mixed to one another. In case of the audio broadcasting channel, one Walsh code (for example, W10 of FIGURE 3) is allocated to three audio broadcasting channels (for example CH4 to CH6 of FIGURE 3). Accordingly, even if the current broadcasting channel CH5 of FIGURE 3 is switched into the upper broadcasting channel CH6 or the lower broadcasting channel CH4, the same Walsh code W10 as the Walsh code W10 of the CH5 is allocated to the lower broadcasting channel CH4 or the upper broadcasting channel CH6. In the case, a Walsh code of a newly added broadcasting channel needs not to be CDM-demodulated or bit-deinterleaved.

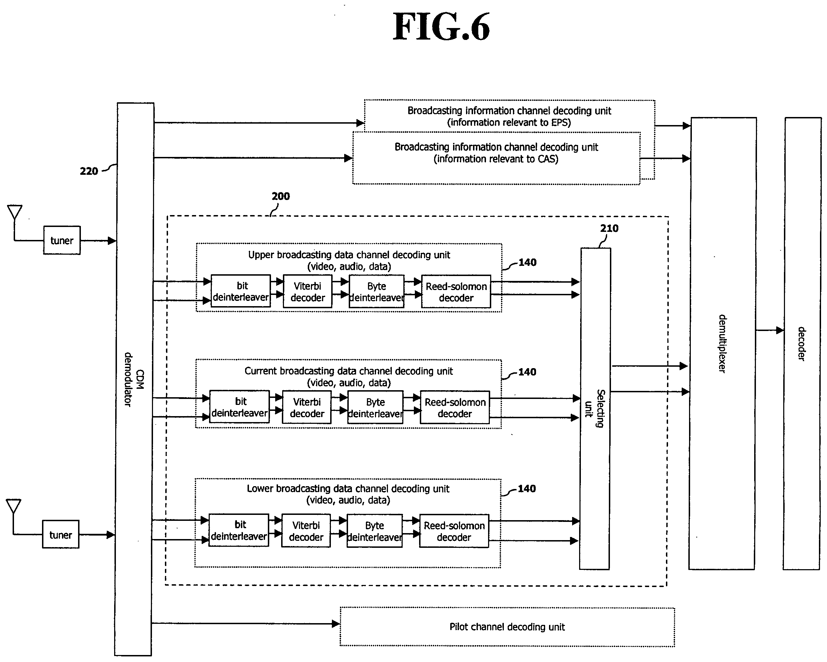

FIGURE 6 is a block diagram showing a satellite DMB receiving apparatus based on a system E according to a second embodiment of the present invention.

The present invention according to the second embodiment is the same as the related art shown in FIGURE 1 except the broadcasting channel data decoder 200. Accordingly, components having the same reference numerals as those of the related art have the same functions as those of the related art.

Referring to FIGURE 6, the broadcasting channel data decoder 200 comprises a broadcasting data channel decoding unit 140 for performing a series of decoding processes with respect to three broadcasting channels according to each channel, and a selecting unit 210.

The broadcasting data channel decoding units 140 separated from one another according to each channel comprise the current broadcasting data channel decoding unit 140 for decoding broadcasting data of the current broadcasting channel, the upper broadcasting data channel decoding unit 140 for decoding broadcasting data of the upper broadcasting channel, and the lower broadcasting data channel decoding unit 140 for decoding broadcasting data of the lower broadcasting channel. The selecting unit 210 extracts only broadcasting data of the broadcasting channel selected by the user among broadcasting data decoded by the broadcasting data channel decoding units 140 according to each channel, thereby outputting to the demultiplexer.

The broadcasting data channel decoding units 140 according to each channel of the present invention have the same construction and operation as those of the related art broadcasting data channel decoding unit 140 shown in FIGURE 1 except the following fact. That is, in the present invention, broadcasting data of the three broadcasting channels is simultaneously decoded and only broadcasting data of the broadcasting channel selected by the user is demultiplexed and decoded, so that the user can watch a video broadcasting provided from the broadcasting channel selected by the user.

In case of performing a channel switching by the user, the steps shown in FIGURE 5 are equally applied.

As aforementioned, in the satellite DMB receiving apparatus of the present invention, the three different broadcasting channels are simultaneously deinterleaved as a bit unit. Accordingly, the delay time generated while the broadcasting data is decoded by the bit deinterleaved when the user performs a channel switching is greatly reduced. As the channel switching time is reduced, even if the user sequentially switches the current broadcasting channel into the upper broadcasting channel or the lower broadcasting channel, the user can watch the broadcasting without delay time.

## Claims

1. A satellite DMB, Digital Multimedia Broadcast, receiving apparatus comprising:
a CDM, Code Division Multiplexing, demodulator (220) configured to demodulate Walsh encoded data of a first broadcast channel selected by a user and two second broadcast channels, wherein two Walsh codes are allocated for each one of the first broadcast channel and the two second broadcast channels, and wherein the two second broadcast channels comprise preference channels preset by the user;
three bit de-interleavers (141) configured to simultaneously de-interleave broadcasting data of the first broadcast channel and broadcasting data of the two second broadcast channels;
a selecting unit (210) configured to output de-interleaved broadcasting data received via the first broadcast channel; and
a broadcasting data channel decoding unit (140) configured to decode the de-interleaved broadcasting data of the first broadcast channel;
wherein the selecting unit (210) is positioned between the three bit de-interleavers (141) and the broadcasting data channel decoding unit (140),
wherein the selecting unit (210) is configured to output de-interleaved broadcasting data received via one of the two second broadcast channels if there is a switch by the user from the first channel to the one of the two second broadcast channels, and
wherein the de-interleaved broadcasting data of the one of the two second broadcast channels is decoded by the broadcasting channel decoding unit (140) when there is the switch by the user from the first channel to the one of the two second broadcast channels.

2. The apparatus of claim 1, wherein the broadcasting data channel decoding unit (140) comprises at least one of a Viterbi decoder (142), a byte de-interleaver (143), and a Reed-Solomon decoder (144).

3. The apparatus of claim 2, wherein the Viterbi decoder (142), the byte de-interleaver (143), and the Reed-Solomon decoder (144) are constructed in pairs.

4. A satellite DMB, Digital Multimedia Broadcasting, receiving method, comprising:
CDM, Code Division Multiplexing, demodulating (S30 and S40) Walsh encoded data of a first broadcast channel selected by a user and two second broadcast channels, wherein two Walsh codes are allocated for each one of the first broadcast channel and the two second broadcast channels, and wherein the two second broadcast channels comprise preference channels preset by the user;
simultaneously de-interleaving (S50) broadcasting data of the first broadcast channel and broadcasting data of the two second broadcast channels;
outputting (S60) de-interleaved broadcasting data received via the first broadcast channel; and
decoding (S70) the de-interleaved broadcasting data of the first broadcast channel;
wherein de-interleaved broadcasting data received via one of the two second broadcast channels is output if there is a switch by the user from the first channel to the one of the two second broadcast channels, and
wherein the de-interleaved broadcasting data of the one of the two second broadcast channels is decoded when there is the switch by the user from the first channel to the one of the two second broadcast channels.

5. The method of claim 4, wherein the decoding of the de-interleaved broadcasting data is performed using at least one of a Viterbi decoder, a byte de-interleaver, and a Reed-Solomon decoder.

6. The method of claim 5, wherein the Viterbi decoder, the byte de-interleaver, and the Reed-Solomon decoder are constructed in pairs.

## Patentansprüche

1. Satelliten-DMB-Empfangsgerät (DMB = Digital Multimedia Broadcast), umfassend:
einen CDM-Demodulator (CDM = Code Division Multiplexing, Codemultiplex) (220), der dazu konfiguriert ist, Walsh-codierte Daten von einem ersten Broadcast-Kanal, der von einem Benutzer ausgewählt wurde, und zwei zweiten Broadcast-Kanälen zu demodulieren, wobei zwei Walsh-Codes für jeden des ersten Broadcast-Kanals und der zwei zweiten Broadcast-Kanäle zugewiesen werden und wobei die zwei zweiten Broadcast-Kanäle Präferenzkanäle, die von dem Benutzer voreingestellt wurden, umfassen;
drei Bit-Entschachteler (141), die dazu konfiguriert sind, Broadcasting-Daten von dem ersten Broadcast-Kanal und Broadcasting-Daten von den zwei zweiten Broadcast-Kanälen gleichzeitig zu entschachteln;
eine Auswahleinheit (210), die dazu konfiguriert ist, entschachtelte Broadcasting-Daten, die mittels des ersten Broadcast-Kanals empfangen wurden, auszugeben; und
eine Broadcasting-Datenkanaldecodiereinheit (140), die dazu konfiguriert ist, die entschachtelten Broadcasting-Daten von dem ersten Broadcast-Kanal zu decodieren;
wobei die Auswahleinheit (210) zwischen den drei Bit-Entschachtelern (141) und der Broadcasting-Datenkanaldecodiereinheit (140) positioniert ist,
wobei die Auswahleinheit (210) dazu konfiguriert ist, entschachtelte Broadcasting-Daten, die mittels eines der zwei zweiten Broadcast-Kanäle empfangen wurden, auszugeben, wenn ein Umschalten von dem ersten Kanal zu dem einen der zwei zweiten Broadcast-Kanäle durch den Benutzer erfolgt, und
wobei die entschachtelten Broadcasting-Daten von dem einen der zwei zweiten Broadcast-Kanäle von der Broadcasting-Kanaldecodiereinheit (140) decodiert werden, wenn ein Umschalten von dem ersten Kanal zu dem einen der zwei zweiten Broadcast-Kanäle durch den Benutzer erfolgt.

2. Gerät nach Anspruch 1, wobei die Broadcasting-Datenkanaldecodiereinheit (140) mindestens einen von einem Viterbi-Decodierer (142), einem Byte-Entschachteler (143) und einem Reed-Solomon-Decodierer (144) umfasst.

3. Gerät nach Anspruch 2, wobei der Viterbi-Decodierer (142), der Byte-Entschachteler (143) und der Reed-Solomon-Decodierer (144) paarweise konstruiert sind.

4. Satelliten-DMB-Empfangsverfahren (DMB = Digital Multimedia Broadcast), umfassend:
CDM-Demodulieren (CDM = Code Division Multiplexing, Codemultiplex) (S30 und S40) von Walsh-codierten Daten von einem ersten Broadcast-Kanal, der von einem Benutzer ausgewählt wurde, und zwei zweiten Broadcast-Kanälen, wobei zwei Walsh-Codes für jeden des ersten Broadcast-Kanals und der zwei zweiten Broadcast-Kanäle zugewiesen werden und wobei die zwei zweiten Broadcast-Kanäle Präferenzkanäle, die von dem Benutzer voreingestellt wurden, umfassen;
gleichzeitiges Entschachteln (S50) von Broadcasting-Daten von dem ersten Broadcast-Kanal und Broadcasting-Daten von den zwei zweiten Broadcast-Kanälen;
Ausgeben (S60) von entschachtelten Broadcasting-Daten, die mittels des ersten Broadcast-Kanals empfangen wurden; und
Decodieren (S70) der entschachtelten Broadcasting-Daten von dem ersten Broadcast-Kanal;
wobei entschachtelte Broadcasting-Daten, die mittels eines der zwei zweiten Broadcast-Kanäle empfangen wurden, ausgegeben werden, wenn ein Umschalten von dem ersten Kanal zu dem einen der zwei zweiten Broadcast-Kanäle durch den Benutzer erfolgt, und
wobei die entschachtelten Broadcasting-Daten von dem einen der zwei zweiten Broadcast-Kanäle decodiert werden, wenn ein Umschalten von dem ersten Kanal zu dem einen der zwei zweiten Broadcast-Kanäle durch den Benutzer erfolgt.

5. Verfahren nach Anspruch 4, wobei das Decodieren der entschachtelten Broadcasting-Daten unter Verwendung von mindestens einem von einem Viterbi-Decodierer, einem Byte-Entschachteler und einem Reed-Solomon-Decodierer durchgeführt wird.

6. Verfahren nach Anspruch 5, wobei der Viterbi-Decodierer, der Byte-Entschachteler und der Reed-Solomon-Decodierer paarweise konstruiert sind.

## Revendications

1. Appareil de réception de diffusion multimédia numérique, DMB, par satellite comprenant :
un démodulateur à multiplexage par répartition en code, CDM, (220) configuré pour démoduler des données codées par codage Walsh d'un premier canal de diffusion sélectionné par un utilisateur et de deux seconds canaux de diffusion, deux codes Walsh étant alloués pour chacun du premier canal de diffusion et des deux seconds canaux de diffusion, et les deux seconds canaux de diffusion comprenant des canaux de préférence préréglés par l'utilisateur ;
trois désentrelaceurs de bits (141) configurés pour désentrelacer simultanément des données de diffusion du premier canal de diffusion et des données de diffusion des deux seconds canaux de diffusion ;
une unité de sélection (210) configurée pour délivrer des données de diffusion désentrelacées reçues par l'intermédiaire du premier canal de diffusion ; et
une unité de décodage de canal de données de diffusion (140) configurée pour décoder les données de diffusion désentrelacées du premier canal de diffusion ;
dans lequel l'unité de sélection (210) est positionnée entre les trois désentrelaceurs de bits (141) et l'unité de décodage de canal de données de diffusion (140),
dans lequel l'unité de sélection (210) est configurée pour délivrer des données de diffusion désentrelacées reçues par l'intermédiaire de l'un des deux seconds canaux de diffusion s'il existe une commutation par l'utilisateur du premier canal à l'un des deux seconds canaux de diffusion, et
dans lequel les données de diffusion désentrelacées de l'un des deux seconds canaux de diffusion sont décodées par l'unité de décodage de canal de diffusion (140) lorsqu'il existe la commutation par l'utilisateur du premier canal à l'un des deux seconds canaux de diffusion.

2. Appareil selon la revendication 1, dans lequel l'unité de décodage de canal de données de diffusion (140) comprend au moins l'un d'un décodeur Viterbi (142), d'un désentrelaceur d'octets (143) et d'un décodeur Reed-Solomon (144).

3. Appareil selon la revendication 2, dans lequel le décodeur Viterbi (142), le désentrelaceur d'octets (143) et le décodeur Reed-Solomon (144) sont construits en paires.

4. Procédé de réception de diffusion multimédia numérique, DMB, par satellite, comprenant :
la démodulation à multiplexage par répartition en code, CDM, (S30 et S40) de données codées par codage Walsh d'un premier canal de diffusion sélectionné par un utilisateur et de deux seconds canaux de diffusion, deux codes Walsh étant alloués pour chacun du premier canal de diffusion et des deux seconds canaux de diffusion, et les deux seconds canaux de diffusion comprenant des canaux de préférence préréglés par l'utilisateur ;
le désentrelacement simultané (S50) de données de diffusion du premier canal de diffusion et de données de diffusion des deux seconds canaux de diffusion ;
la délivrance (S60) de données de diffusion désentrelacées reçues par l'intermédiaire du premier canal de diffusion ; et
le décodage (S70) des données de diffusion désentrelacées du premier canal de diffusion ;
dans lequel des données de diffusion désentrelacées reçues par l'intermédiaire de l'un des deux seconds canaux de diffusion sont délivrées s'il existe une commutation par l'utilisateur du premier canal à l'un des deux seconds canaux de diffusion, et
dans lequel les données de diffusion désentrelacées de l'un des deux seconds canaux de diffusion sont décodées lorsqu'il existe la commutation par l'utilisateur du premier canal à l'un des deux seconds canaux de diffusion.

5. Procédé selon la revendication 4, dans lequel le décodage des données de diffusion désentrelacées est réalisé à l'aide d'au moins l'un parmi un décodeur Viterbi, un désentrelaceur d'octets et un décodeur Reed-Solomon.

6. Procédé selon la revendication 5, dans lequel le décodeur Viterbi, le désentrelaceur d'octets et le décodeur Reed-Solomon sont construits en paires.
